# EUROPÄISCHE PATENTSCHRIFT

(11) **EP 1 323 943 B1**
(45) Veröffentlichungstag und Bekanntmachung des Hinweises auf die Patenterteilung: **14.12.2005**
(21) Anmeldenummer: 02028768.6
(22) Anmeldetag: 23.12.2002
(51) Int. Cl.: F16D 69/02, C04B 35/80, C04B 35/573

(54) **Faserverstärker keramischer Verbundwerkstoff**
Fiber reinforced ceramic composite
Materiau composite céramique renforcé par des fibres

(30) Priorität: 31.12.2001 DE 10164226
(43) Veröffentlichungstag der Anmeldung: 02.07.2003
(73) Patentinhaber: AUDI AG, 85045 Ingolstadt (DE)
(72) Erfinder: Bauer, Moritz, 86153 Augsburg (DE); Burkhart, Georg, Dr., 86420 Diedorf (DE); Christ, Martin, Dr., 86517 Wehringen (DE); Hüner, Ronald, Dr., 86674 Baar (DE); Kienzle, Andreas, Dr., 86672 Thierhaupten (DE); Winkelmann, Peter, 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 1 211 231
- WO-A-02/26659
- WO-A-99/41069
- FR-A- 2 781 852

## Beschreibung

Die Erfindung betrifft Formkörper aus faserverstärkten keramischen Verbundwerkstoffen. Insbesondere betrifft sie auch Bauteile aus faserverstärkten keramischen Verbundwerkstoffen in zentrosymmetrischer Gestalt, insbesondere zylindrische Scheiben, beispielsweise Reibkörper. Weiterhin betrifft die Erfindung ein Verfahren gemäß Anspruch 9 zur Herstellung von Formkörpern.

Für die Herstellung von tribologisch hochbelasteten Werkstoffen, die beispielsweise für Reibkörper wie Bremsscheiben und Kupplungsscheiben eingesetzt werden, sind kohlenstoffaserverstärkte Verbundwerkstoffe oder Keramiken, insbesondere mit SiC-haltiger Matrix, von besonderem Interesse. Diese Werkstoffe zeichnen sich durch hohe Temperaturbeständigkeit, geringen Verschleiß und gute tribologische Eigenschaften aus.

In der DE-A 199 39 545 wird vorgeschlagen, zur Erhöhung der Belastbarkeit und Leistungsfähigkeit gegenüber dem Stand der Technik Kupplungsscheiben mit Reibbelägen aus mit Kohlenstoffasern verstärktem Siliciumcarbid (SiC) zu verwenden. Über die genaue Natur des Werkstoffes wird hier keine Aussage gemacht.

Nachteilig bei diesem Werkstoff ist, daß die Herstellung einer dichten SiC-Matrix mit einer Faserverstärkung aus Kohlenstoffasern technisch nur aufwendig zu realisieren ist. Ein technischer Fortschritt bei der Materialsynthese ist dem gegenüber die Infiltration von mit Kohlenstoffasern verstärkten kohlenstoffhaltigen Vorkörpern mit flüssigem Silicium, wobei Verbundwerkstoffe entstehen, die Kohlenstoffasern als Verstärkungsfasern enthalten, und deren Matrix Phasen aus metallischem Silicium und Siliciumcarbid enthält.

Aus der DE-C 44 38 455 ist bekannt, Reibeinheiten, insbesondere Brems- und Kupplungskörper aus C/C-SiC (mit Kohlenstoffasern verstärkten Werkstoffen, deren Matrix Silicium, Siliciumcarbid und Reste von Kohlenstoff enthält) durch Infiltration von mit Hohlräumen und Ausnehmungen versehenen porösen, mit Kohlenstoffasern verstärkten Kohlenstoffkörpern (C/C-Körpern) mit flüssigem Silicium zu erzeugen. Durch die Ausnehmungen und Hohlräume wird jedoch die Festigkeit des Körpers vermindert. Untersuchungen zeigen, daß selbst massive Scheiben für hohe Scheiben-Rotationsgeschwindigkeiten oder Drehzahlen ungeeignet sind, wie sie beispielsweise bei Kupplungsscheiben auftreten.

Aus der EP-A 1124074 und der EP-A 1124071 sind Bremsscheiben aus C/SiC (mit Kohlenstoffasern verstärkte keramische Verbundwerkstoffe, deren Matrix Siliciumcarbid enthält) und Herstellungsverfahren für diese bekannt, bei denen neben einem mit Kohlenstoff-Kurzfaserbündeln verstärkten Grundmaterial auch Langfasern zur Verstärkung vorgesehen sind. Die Langfasern erstrecken sich um die Form der Bremsscheibe. Hierdurch soll das Rißwachstum gebremst und die Scheibenfestigkeit erhöht werden. Das Matrixmaterial dieser Scheiben ist einheitlich zusammengesetzt, dies führt zu einer homogenen Werkstoffzusammensetzung des Fertigteils.

In der Patentanmeldung DE 10157583.1 werden Reibkörper aus C/SiC mit einer Reibschicht beschrieben, die mit in der Scheibenebene ausgerichteten Langfasern verstärkt sind. Das die Langfasern umgebende C/SiC ist, ebenso wie die Deckschicht, kurzfaserverstärkt. Das Herstellungsverfahren geht von Einlegeteilen aus Langfaserbündeln in eine kurzfaserhaltige Pressmasse aus. Die Reibschicht weist dabei einen geringeren Anteil an Kohlenstoff-Kurzfasern auf als die Kernzone.

Zur Erzielung hoher Langfasergehalte und einer über das gesamte Bauteil gleichmäßigen Langfaserverteilung sind beide genannten Herstellungsverfahren weniger geeignet. Beides ist aber Voraussetzung für eine weitere Steigerung der Festigkeit gegenüber rotierender Belastung.

Aufgabe der Erfindung ist es daher, faserverstärkte keramische Verbundwerkstoffe zur Herstellung von Formkörpern, insbesondere Reibkörpern, bereitzustellen, die gegenüber rotierender Beanspruchung, insbesondere bei hohen Drehzahlen, eine höhere Festigkeit aufweisen. Eine weitere Aufgabe ist es, ein technisch einfaches und kostengünstiges Verfahren zur Einbringung der Langfaserverstärkung zu finden. Weiter ist die Aufgabe, eine hinsichtlich der Reib- und Verschleißeigenschaften optimierte Deckschicht für diese Reibkörper zur Verfügung zu stellen.

Die Aufgabe wird gelöst durch einen faserverstärkten keramischen Verbundwerkstoff, insbesondere einen C/SiC-Werkstoff, dessen in den daraus hergestellten Formkörpern innenliegende Bereiche mit Faserbündeln, -kabeln, oder -strängen verstärkt sind, welche im wesentlichen parallel bzw. konzentrisch zur äußeren Kontur bzw. Umfang ausgerichtet und vollständig von einer kurzfaserverstärkten Matrix, bevorzugt C/SiC, umhüllt sind, und die weiter eine Deckschicht aus einem gleichartigen kurzfaserverstärktem Matrixmaterial mit niedrigerem Fasergehalt umfassen, insbesondere eine Deckschicht aus C/SiC mit höherem SiC-Gehalt als im innenliegenden Bereich. Die Verstärkungsfasern, d. h. die Kurz- und Langfasern, haben dabei unabhängig voneinander einen mittleren Durchmesser von 4 bis 12, bevorzugt 5 bis 10, und insbesondere 6 bis 8 µm. Bevorzugt handelt es sich bei den Verstärkungsfasern um Kohlenstoffasern.

Die Erfindung betrifft daher faserverstärkte keramische Verbundwerkstoffe umfassend Faserbündel, -kabel oder -stränge, welche vollständig von einer kurzfaserverstärkten Matrix umhüllt sind, wobei die Lang- und Kurz-Fasern unabhängig voneinander einen mittleren Durchmesser von 4 bis 12 µm aufweisen.

Weiter betrifft die Erfindung Formkörper aus derartigen Werkstoffen, insbesondere Reibkörper in Form von zylindrischen Scheiben oder Kreisringscheiben, die bevorzugt zusätzlich mindestens eine Deckschicht aus einem gleichartigen kurzfaserverstärktem Matrixmaterial mit niedrigerem Fasergehalt umfassen, insbesondere eine Deckschicht aus C/SiC mit höherem SiC-Gehalt als im innenliegenden Bereich.

Die Erfindung betrifft ebenfalls ein Verfahren zur Herstellung derartiger faserverstärkter keramischer Werkstoffe sowie auch ein Verfahren zur Herstellung von Formkörpern aus diesen Werkstoffen.

Bei den erfindungsgemäßen keramischen Verbundwerkstoffen handelt es sich bevorzugt um C/SiC-Keramiken, die als Verstärkungsfasern Kohlenstoffasern und als Matrix hauptsächlich Phasen aus Siliciumcarbid und Silicium enthalten.

Bei Formkörpern aus den erfindungsgemäßen Werkstoffen kann im allgemeinen zwischen einer Kernzone and mindestens einer Deckschicht unterschieden werden, wobei die Deckschicht bezüglich ihrer tribologischen Eigenschaften optimiert ist. Die Deckschicht ist dabei typischerweise als Reibschicht ausgebildet und besitzt einen höheren SiC-Gehalt als die Kernzone. Bevorzugt beträgt der Massenanteil an SiC in der Deck- oder Reibschicht mindestens das 1,1-fache des Massenanteils des SiC in der Kernzone.

Die Kernzone enthält Langfaserbündel, -stränge oder -kabel und durch Kurzfasern oder Kurzfaserbündel verstärktes C/SiC. Bei beiden Fasern handelt es sich üblicherweise um kohlenstoffhaltige Fasern, bevorzugt Kohlenstoff- oder Graphit-Fasern. Bevorzugt liegt die Summe der Massenanteile beider Fasern in der Kernzone im Bereich von 20 bis 90 %, der Massenanteil an SiC bei 30 bis 70 % und der Massenanteil an Silicium bei 0 bis 30 %. Dabei ist der Massenanteil für eine bestimmte Komponente in üblicher Weise definiert als Verhältnis der Masse dieser Komponente zur Masse der Mischung. In der Deckschicht liegt der Massenanteil der Fasern typischerweise bei 0 bis 35 %, der Massenanteil an Siliciumcarbid bei 45 bis 100 % und der Massenanteil an Silicium bei 0 bis 30 %. Der Massenanteil an SiC in der Deckschicht ist bevorzugt um mindestens 10 % höher (also mindestens das 1,1-fache) als in der Kernzone, und die Dichte der Deckschicht ist um mindestens 5% höher als die der Kernzone. Es wurde gefunden, daß hierdurch die gewünschten tribologischen Eigenschaften der Deckschicht hervorgerufen werden. Es ist jedoch auch möglich, Kernzone and Deckschicht mit nahezu gleicher Zusammensetzung auszuführen. Dies ist insbesondere dann möglich, wenn die Kernzone bereits einen relativ hohen SiC-Gehalt aufweist.

Für tribologische Anwendungen wie Reibscheiben liegt die Dicke der SiC-reichen Deckschicht oder Reibschicht üblicherweise bei mindestens 0,1 mm, bevorzugt mindestens 0,3 mm und besonders bevorzugt mindestens 1 mm.

Das angepaßte Herstellungsverfahren sieht vor, Kabel von Langfasern mit einer Kurzfaserbündel enthaltenden Masse zu beschichten und die beschichteten und binderhaltigen Faserkabel in der gewünschten Richtung zu wickeln oder abzulegen und hierauf den daraus hergestellten Formkörper auszuhärten und zu keramisieren. Im Falle der C/SiC-Werkstoffe erfolgt dies durch Carbonisieren zu einem porösen C/C-Körper und zumindest teilweise Silicierung des Kohlenstoffs der Matrix durch Infiltration mit flüssigem Silicium. Die Reibschicht beziehungsweise deren Vormaterial kann vor dem Aushärten oder vor der Keramisierung (hier vor der Carbonisierung oder vor der Silicierung) auf den Kernkörper aufgebracht werden.

Als Langfasern werden hier solche Fasern bezeichnet, die eine mittlere Länge von mindestens 50 mm, bevorzugt mindestens 75 mm, und insbesondere mindestens 100 mm aufweisen.

Als Kurzfasern werden hier solche Fasern bezeichnet, die eine mittlere Länge von höchstens 40 mm, bevorzugt maximal 20 mm, und insbesondere maximal 10 mm aufweisen.

In dem in den genannten Dokumenten beschriebenen Stand der Technik werden diskrete Lagen aus Langfasern erzeugt, die sich zwischen einer oberen und einer unteren C/SiC-Schicht befinden, wodurch eine Abfolge von langfaserverstärktem und unverstärktem C/SiC in Richtung senkrecht zur Scheibenfläche entsteht. Demgegenüber wird bei dem erfindungsgemäßen Verfahren jedes Faserkabel vollständig mit dem Vorläufer-Material der Matrix, z. B. einer C/SiC-Matrix, umhüllt und übereinander oder nebeneinander abgelegt, oder gewickelt. Hierdurch ergeben sich keine unerwünschte Gradienten des Langfasergehaltes senkrecht oder parallel zur Scheibenfläche.

Das bevorzugte Verfahren zur Herstellung der faserverstärkten keramischen Verbundwerkstoffe ist die Flüssigsilicierung von C/C-Vorkörpern (im englischen auch als "CFC", carbon fibre-reinforced carbon, bezeichnet) zur Herstellung von C/SiC.

Solche Verfahren zur Herstellung von C/SiC-Verbundkörpern sind beispielsweise aus der DE-A 198 56 721, der DE-C 197 11 829, der DE-C 44 38 455 und der DE-A 197 10 105 bekannt.

Diese Verfahren umfassen im allgemeinen die folgenden Schritte:
1. Herstellen einer Mischung aus kohlenstoffhaltigen Lang- oder Kurzfasern, die gebündelt sein können und/oder mit einer Beschichtung überzogen worden sein können, und Bindemitteln, wie beispielsweise Harz und/oder Pech, sowie gegebenenfalls weiteren Füllmitteln
2. Formgebung and Härtung dieser faserstoffhaltigen Mischungen unter erhöhtem Druck und/oder erhöhter Temperatur zur Erzeugung eines Grünlings
3. Carbonisierung oder Graphitierung des Grünlings zur Herstellung eines porösen Formkörpers, insbesondere eines aus kohlenstoffaserverstärktem Kohlenstoff bestehenden Formkörpers (CFC oder C/C)
4. Infiltrieren des porösen Formkörpers mit einer Silicium-Schmelze und mindestens partielle Reaktion des Kohlenstoffs zu SiC unter Bildung eines C/SiC Formkörpers

Im erfindungsgemäßen Verfahren werden die Langfasern mit einer Kurzfaserbündelmasse beschichtet und in der gewählten Vorzugsrichtung gewickelt oder abgelegt. Die Kurzfaserbündelmasse ist so gestaltet, daß sich nach deren Silicierung ein kurzfaserverstärktes C/SiC ausbildet, das die Langfasern umhüllt.

Die Langfasern liegen typischerweise als Bündel, Roving, oder Kabel vor. Dabei ist es von Vorteil, wenn die einzelnen Filamente oder auch die Bündel mit carbonisierbarem Material oder Kohlenstoff beschichtet sind. Als Langfasermaterial eignet sich ebenso zu dünnen Streifen geschnittenes Fasergewebe, da hier eine besonders gute Verzahnung zwischen den einzelnen Filamenten stattfindet. Im folgenden sollen derartige Langfasern gemeinsam als Faserstrang bezeichnet werden.

Die Einstellung der bevorzugten Hauptrichtung der Faserstränge in Umfangsrichtung kann auf verschiedene Weise mit unterschiedlichen geometrischen Varianten erfolgen, von denen im Folgenden einige bevorzugte Varianten beschrieben sind. Dabei ist es wesentlich, daß keine Knicke oder Krümmungen mit geringen Krümmungsradius gebildet werden. Bevorzugt beträgt der Krümmungsradius mindestens 5 mm, besonders bevorzugt mindestens 10 mm.

Bevorzugte Ausführungsformen für die Anordnung von Langfasern in der gewünschten Richtung in Formkörpern aus den erfindungsgemäßen Werkstoffen sind beispielsweise:
a) die Langfasern bilden eine zur Scheibe konzentrische Spirale
b) die Langfasern bilden Wellenzüge, wobei deren Maxima und Minima auf konzentrischen Kreisen um den Mittelpunkt einer Kreisscheibe liegen, die den Umriß des Formkörpers wiedergibt,
c) die Langfasern bilden abwechselnd oder in beliebiger Reihenfolge wechselnd mit unterschiedlichen Radien Wellenzüge wie unter b) beschrieben und Kreise, beide jeweils konzentrisch um den Mittelpunkt der Kreisscheibe
d) die Langfasern bilden den Umriß eines stilisierten drei-, vier- oder mehrblättigen Kleeblatts
e) die Langfasern bilden ein Pentagramm mit abgerundeten Ecken
f) die Langfasern bilden konzentrische Kreisbahnen mit Epizyklen

Selbstverständlich können auch mehrere dieser Anordnungen in einem Formkörper beispielsweise in verschiedenen Ebenen kombiniert werden. In allen Fällen ist es wesentlich, daß die Langfasern beim Legen der Anordnungen nicht geknickt werden; bevorzugt sind die Krümmungsradien mindestens das fünffache, besonders bevorzugt das zehnfache, und insbesondere das fünfzigfache des Faserdurchmessers der Einzelfasern. Soweit spitze Winkel gebildet werden sollen, ist es bevorzugt, die Langfasern an diesen Stellen zu trennen und im spitzen Winkel miteinander zu verkleben. Ebenso werden die Langfasern, die eine konzentrische Lage bilden, an ihrer Stoßstelle bevorzugt verklebt. Es ist bevorzugt darauf zu achten, daß innerhalb eines Kreissektors mit einem Öffnungswinkel von 5°, bevorzugt innerhalb von 10°, nicht mehrere solcher Stoßstellen oder Klebestellen sind.

Bei der Ausführungsform gemäß a) wird ein Langfaserkabel, das mit Kurzfaserbündelmasse beschichtet ist, um einen entfernbaren Kern aufgewickelt. Dabei ergibt sich eine spiralförmige Ausrichtung der Langfasern in der Scheibenebene. Hierdurch wird eine Scheibe bzw. ein flacher Zylinder gebildet.

In anderen bevorzugten Varianten werden die beschichteten Langfaserstränge in verschiedenen geometrischen Mustern abgelegt oder geflochten, wobei sich als resultierende Ausrichtung eine Vorzugsrichtung in Umfangsrichtung bzw. in konzentrischen Kreisen um den Mittelpunkt des scheibenförmigen Formkörpers ergibt. Typische weitere Beispiele der Faserausrichtung entsprechen den Ausführungsformen b) bis f). Zur Fadenführung der Faserstränge werden dabei typischerweise entfernbare Dome verwendet. Die Höhe des Geleges entspricht im wesentlichen der Dicke der zu fertigenden Scheibe. Zur Erzielung einer höchstmöglichen Festigkeit und Stabilität bei hohen Rotationsgeschwindigkeiten ist es vorteilhaft, möglichst das gesamte Volumen des Formkörpers mit den beschichten Fasersträngen zu füllen. Verbleibende Zwickel werden mit der Kurzfasern enthaltenden Masse aufgefüllt. Wichtig für die Anordnungen ist, daß Stoßstellen nicht innerhalb eines engen Winkelbereichs der Scheibe gebildet werden, sondern möglichst gleichmäßig über den Umfang verteilt sind.

Bei allen Varianten ist es auch möglich, die Faserbündel oder Faserstränge zuvor um ihre Längsachse zu verdrehen, wodurch sich eine bessere Verzahnung der Verstärkungsfasern ergibt.

Mit dem erfindungsgemäßen Verfahren lassen sich auf einfache Weise auch sehr hohe Volumenanteile an Langfasern in der Kernzone mit über 50 % realisieren. Obwohl der Verstärkungseffekt bereits bei einem Volumenanteil von mindestens 20 % an Langfasern in der Kernzone deutlich zu bemerken ist, werden gerade für Kupplungsscheiben höchste Anteile von bis zu 90 % angestrebt.

Die mit den Langfasergelegen in der beschriebenen Weise gefertigten Formkörper, bevorzugt in der Form von Scheiben, werden zur Herstellung von Grünkörpern thermisch ausgehärtet. Typischerweise geschieht dies in einer beheizten Preßvorrichtung. Sollen auf die Deckflächen der Scheibe Reibschichten aufgebracht werden, so werden diese bevorzugt beim Preßvorgang in Form hierfür geeigneter Kurzfaserbündelmassen oder Massen aus Kohlenstoffmaterial in die Presse eingebracht. Ebenso ist es aber auch möglich, die Masse für die Reibschichten separat zu fertigen and erst später auf den Grünkörper oder den carbonisierten Grünkörper aufzubringen.
Für die Beschichtung der Faserstränge werden bevorzugt faserstoffbündelhaltige Massen oder Kurzfaserbündelmassen verwendet. Sie sind typischerweise aus Kurzfaserbündeln, Bindern und/oder Kohlenstoffmaterial aufgebaut Bevorzugt bestehen die Kurzfaserbündelmassen nahezu vollständig aus mit kohlenstoffhaltigem Material beschichteten Kurzfasern, besonders bevorzugt aus mit Kohlenstoff beschichteten Kurzfasern.

Kurzfaserbündelmassen werden besonders bevorzugt durch Zerkleinern von mit Kohlenstoff beschichteten Fasermatten oder -platten hergestellt, die typischerweise durch ein- oder mehrmaliges Carbonisieren und Imprägnieren mit Pechen and/oder Harzen hergestellt wurden.

Die Haftung der Kurzfaserbündelmasse auf den Langfasern wird sichergestellt entweder durch klebrige Binder auf den Langfasern, oder durch klebrige Binder in der Kurzfaserbündelmasse.

Für die Anwendung als Reibscheibe, insbesondere Bremsscheibe oder besonders bevorzugt Kupplungsscheibe werden die Formkörper als Scheiben ausgebildet, die zumindest auf einer der flachen Oberflächen eine tribologisch aktive Deckfläche aufweisen. Je nach Anwendungsprinzip können aber auch die anderen Flächen des Reibkörpers, nämlich die (äußeren und inneren) Mantelflächen, als Reibflächen ausgebildet sein.

Die erfindungsgemäßen faserverstärkten keramischen Verbundwerkstoffe lassen sich mit Vorteil zur Herstellung von Kupplungsscheiben mit hohen Rotationsgeschwindigekiten verwenden, da sie durch die erfindungsgemäße Verstärkung mit Langfasern bzw. Langfaser-Anordnungen erhöhte Berst-Drehzahlen aufweisen.

## Patentansprüche

1. Formkörpers aus faserverstärkten keramischen Verbundwerkstoffen enthaltend Faserbündel, - kabel oder -stränge von Langfasern, mit mindestens einer zusätzlichen Deckschicht, **dadurch gekennzeichnet, daß** die Langfaserbündel, -kabel oder -stränge vollständig von einer kurzfaserverstärkten Matrix umhüllt sind, daß die Langfasern einen mittleren Durchmesser von 4 bis 12 µm und eine mittlere Länge von mindestens 50 mm, und die Kurzfasern einen mittleren Durchmesser von 4 bis 12 µm und eine mittlere Länge von höchstens 40 mm haben, daß die Langfasern so gelegt sind, daß ihr Krümmungsradius stets mindestens das fünffache des Faserdurchmessers der Einzelfasern beträgt, und wobei die. Deckschicht einen niedrigeren Fasergehalt als der Formkörper aufweist.

2. Faserverstärkte keramische Verbundwerkstoffe nach Anspruch 1, **dadurch gekennzeichnet, daß** die Langfasern Kohlenstoffasern und/oder Graphitfasem sind.

3. Faserverstärkte keramische Verbundwerkstoffe nach Anspruch 1, **dadurch gekennzeichnet, daß** die Kurzfasern Kohlenstoffasern und/oder Graphitfasern sind.

4. Faserverstärkte keramische Verbundwerkstoffe nach Anspruch 1, **dadurch gekennzeichnet, daß** die Matrix Siliciumcarbid enthält.

5. Faserverstärkte keramische Verbundwerkstoffe nach Anspruch 1, **dadurch gekennzeichnet, daß** die Matrix metallisches Silicium enthält.

6. Faserverstärkte keramische Verbundwerkstoffe nach Anspruch 1, **dadurch gekennzeichnet, daß** Summe der Massenanteile von Lang- und Kurzfasern im Bereich von 20 bis 90 % liegt.

7. Faserverstärkte keramische Verbundwerkstoffe nach Anspruch 4, **dadurch gekennzeichnet, daß** der Massenanteil an SiC 30 bis 70 % beträgt.

8. Faserverstärkte keramische Verbundwerkstoffe nach Anspruch 5, **dadurch gekennzeichnet, daß** der Massenanteil an Silicium bis zu 30 % beträgt.

9. Verfahren zur Herstellung von Formkörpern aus faserverstärkten keramischen Verbundwerkstoffen nach Anspruch 1, **dadurch gekennzeichnet, daß** im ersten Schritt eine Mischung hergestellt wird aus kohlenstoffhaltigen Langfasern, die mit einer Beschichtung mit aus einer Kurzfaserbündelmasse beschichtet worden sind, und Bindemitteln ausgewählt aus Harzen und Pech, diese Mischungen im zweiten Schritt unter erhöhtem Druck und/oder erhöhter Temperatur zur Erzeugung eines Grünlings in einer Form gepreßt werden, im dritten Schritt die Carbonisierung und/oder Graphitierung des Grünlings zur Herstellung eines porösen Formkörpers vorgenommen wird, und im vierten Schritte durch Infiltrieren des porösen Formkörpers mit einer Silicium-Schmelze und mindestens partielle Reaktion des Kohlenstoffs zu SiC ein C/SiC Formkörper gebildet wird, wobei die Langfasern in Vorzugsrichtung so gewickelt oder abgelegt werden, daß ihr Krümmungsradius stets mindestens das fünffache des Faserdurchmessers der Einzelfasern beträgt.

10. Verwendung von faserverstärkten keramischen Verbundwerkstoffen nach Anspruch 1 zur Herstellung von Kupplungs- oder Bremsscheiben.

11. Verwendung nach Anspruch 10, **dadurch gekennzeichnet, daß** die Verbundwerkstoffe in die Form von zylindrischen Scheiben oder Kreisringscheiben als Kernzone gebracht werden und daß sie mindestens eine Deckschicht aus einem kurzfaserverstärktem Matrixmaterial mit niedrigerem Fasergehalt als in der Kernzone tragen.

12. Verwendung nach Anspruch 11, **dadurch gekennzeichnet, daß** die Deckschicht einen höherem SiC-Gehalt als die Kernzone aufweist.

## Claims

1. A shaped fiber-reinforced ceramic composite body comprising bundles, tows or hanks of long fibers having at least one additional covering layer, wherein the long fiber bundles, tows or hanks are completely surrounded by a short fiber-reinforced matrix, the long fibers have a mean diameter of from 4 to 12 µm and a mean length of at least 50 mm and the short fibers have a mean diameter of from 4 to 12 µm and a mean length of not more than 40 mm, the long fibers are laid so that their radius of curvature is always at least five times the fiber diameter of the individual fibers, and the covering layer has a lower fiber content than the shaped body.

2. A fiber-reinforced ceramic composite as claimed in claim 1, wherein the long fibers are carbon fibers and/or graphite fibers.

3. A fiber-reinforced ceramic composite as claimed in claim 1, wherein the short fibers are carbon fibers and/or graphite fibers.

4. A fiber-reinforced ceramic composite as claimed in claim 1, wherein the matrix comprises silicon carbide.

5. A fiber-reinforced ceramic composite as claimed in claim 1, wherein the matrix comprises metallic silicon.

6. A fiber-reinforced ceramic composite as claimed in claim 1, wherein the sum of the proportions by mass of long and short fibers is in the range from 20 to 90 %.

7. A fiber-reinforced ceramic composite as claimed in claim 4, wherein the proportion by mass of SiC is from 30 to 70 %.

8. A fiber-reinforced ceramic composite as claimed in claim 5, wherein the proportion by mass of silicon is up to 30 %.

9. A process for producing shaped fiber-reinforced ceramic composite bodies as claimed in claim 1, which comprises, in the first step, producing a mixture from carbon-containing long fibers, which may have been coated with a coating comprising a short fiber bundle composition, and binders selected from among resins and pitch, pressing this mixture in a mold in the second step under increased pressure and/or at elevated temperature to produce a green body, carrying out carbonization and/or graphitization of the green body in the third step to produce a porous shaped body, and, in the fourth step, forming a shaped C/SiC body by infiltration of the porous shaped body with a silicon melt and at least partial reaction of the carbon to produce SiC, with the long fibers being wound or laid in the preferential direction so that their radius of curvature is always at least five times the fiber diameter of the individual fibers.

10. The use of fiber-reinforced ceramic composites as claimed in claim 1 for producing clutch disks or brake disks.

11. The use as claimed in claim 10, wherein the composites are brought to the shape of cylindrical disks or annular disks as core zone and they bear at least one covering layer of a short fiber-reinforced matrix material having a lower fiber content than the core zone.

12. The use as claimed in claim 11, wherein the covering layer has a higher SiC content than the core zone.

## Revendications

1. Corps moulé à partir de matériaux composites céramiques renforcés par des fibres contenant des faisceaux, des câbles ou des cordes de longues fibres, avec au moins une couche de protection additionnelle, **caractérisé en ce que** les faisceaux, les câbles ou les cordes de longues fibres sont enrobés par une matrice de renforcement à fibres courtes, **en ce que** les longues fibres ont un diamètre moyen de 4 à 12 µm et une longueur moyenne d'au moins 50 mm, et que les fibres courtes ont un diamètre moyen de 4 à 12 µm et une longueur moyenne de 40 mm au plus, que les fibres longues sont disposées de manière à ce que leur rayon de courbure soit au moins le quintuple du diamètre de fibre des fibres individuelles, et dans lequel la couche de protection présente une teneur en fibres plus faible que le corps moulé.

2. Composite céramique renforcé par des fibres selon la revendication 1, **caractérisé en ce que** les fibres longues sont des fibres de carbone et/ou des fibres de graphite.

3. Composite céramique renforcé par des fibres selon la revendication 1, **caractérisé en ce que** les fibres courtes sont des fibres de carbone et/ou des fibres de graphite.

4. Composite céramique renforcé par des fibres selon la revendication 1, **caractérisé en ce que** la matrice contient du carbure de silicium.

5. Composite céramique renforcé par des fibres selon la revendication 1, **caractérisé en ce que** la matrice contient du silicium métallique.

6. Composite céramique renforcé par des fibres selon la revendication 1, **caractérisé en ce que** la somme des proportions en masse de fibres longues et courtes se situe dans la gamme de 20 à 90 %.

7. Composite céramique renforcé par des fibres selon la revendication 4, **caractérisé en ce que** la proportion en masse de SiC est entre 30 et 70 %.

8. Composite céramique renforcé par des fibres selon la revendication 5, **caractérisé en ce que** la proportion en masse de silicium est au maximum de 30 %.

9. Procédé de production de corps moulés à partir de matériaux céramiques renforcés par des fibres selon la revendication 1, **caractérisé en ce que**, dans la première étape on prépare un mélange de longues fibres contenant du carbone, qui ont été recouvertes avec un revêtement d'une composition de faisceaux de fibres courtes, et de liants choisis parmi les résines et le goudron, on presse ces mélanges dans une deuxième étape sous pression élevée et/ou température élevée pour produire une ébauche dans un moule, dans la troisième étape on effectue la carbonisation et/ou la graphitisation de l'ébauche pour produire une pièce moulée poreuse, et dans la quatrième étape on forme une pièce moulée C/SiC par infiltration de la pièce moulée poreuse avec une fonte de silicium et la réaction au moins partielle du carbone en SiC, avec les longues fibres étant enroulées ou disposées dans une direction préférentielle de sorte que leur rayon de courbure soit au moins le quintuple du diamètre de fibre des fibres individuelles.

10. Utilisation de matériaux composites céramiques renforcés par des fibres selon la revendication 1 pour la production de disques d'embrayage ou de freins.

11. Utilisation selon la revendication 10, **caractérisée en ce que** l'on met les matériaux composites sous la forme de disques cylindriques ou de disques annulaires dans la zone du noyau et **en ce qu'**ils portent au moins une couche de protection d'un matériau de matrice renforcé par des fibres courtes ayant une teneur en fibres plus faible que dans la zone du noyau.

12. Utilisation selon la revendication 11, **caractérisée en ce que** la couche de protection présente une teneur en SiC plus élevée que la zone du noyau.
